# EUROPÄISCHE PATENTSCHRIFT

(11) **EP 0 625 830 B1**
(45) Veröffentlichungstag und Bekanntmachung des Hinweises auf die Patenterteilung: **28.08.2002**
(21) Anmeldenummer: 94107178.9
(22) Anmeldetag: 07.05.1994
(51) Int. Cl.: H04B 1/16, H04N 7/20

(54) **Satellitenempfänger mit einer Vorrichtung zur Erzeugung von Gleichspannungen mit oder ohne überlagerter Wechselspannung zur Steuerung der Ausseneinheit einer Satellitenempfangsanlage**
Satellite receiver with circuit for generating DC-voltages with a possible superimposed AC-voltage for control of the external unit
Récepteur satellite comprenant un circuit pour engendrer une tension continue à laquelle peut être éventuellement superposée une tension alternative pour la commande d'une unité externe

(30) Priorität: 19.05.1993 DE 4316800
(43) Veröffentlichungstag der Anmeldung: 23.11.1994
(73) Patentinhaber: GRUNDIG Aktiengesellschaft, 90471 Nürnberg (DE)
(72) Erfinder: Maurer, Bernhard, GRUNDIG E.M.V., D-90748 Fürth (DE); Bierschneider, Michael, GRUNDIG E.M.V., D-90748 Fürth (DE)

(56) Entgegenhaltungen:
- EP-A- 0 300 173
- DE-A- 4 132 287

## Beschreibung

Die Erfindung betrifft einen Satellitenempfänger mit einer Vorrichtung zur Erzeugung von Gleichspannungen für die Außeneinheit einer Satellitenempfangsanlage.

Über Satellit ausgestrahlte Rundfunksendungen werden mittels einer Satellitenempfangsanlage, die für den Empfang von Frequenzen im sog. SHF-Bereich (Super High Frequencies) geeignet ist, empfangen. Eine solche Satellitenempfangsanlage besteht aus einer Außen- und einer Inneneinheit. Zur Außeneinheit gehört mindestens eine Satellitenantenne und für jede Satellitenantenne mindestens ein rauscharmer Frequenzumsetzer bzw. LNC (Low Noise Converter). Mittels des rauscharmen Frequenzumsetzers wird das empfangene Signal vom SHF-Bereich in einen Zwischenfrequenzbereich umgesetzt, der üblicherweise bei 950 - 1750 MHz liegt.

Dieses Zwischenfrequenzsignal wird über ein Koaxialkabel, dessen Länge beispielsweise 10-20 m betragen kann, der Inneneinheit der Satellitenempfangsanlage zugeführt. Diese Inneneinheit ist ein Satellitenempfänger, welcher einen Satellitentuner für die Selektion des gewünschten Kanals, einen Umsetzer zur Umwandlung des selektierten Signals in das Basisband und ggfs. einen Modulator zur Umsetzung des aufbereiteten Basisbandsignals in den VHFoder UHF-Bereich aufweist.

Das Koaxialkabel zwischen der Außen- und der Inneneinheit dient außer zur Übertragung des Zwischenfrequenzsignals auch zur Übertragung von Gleichspannungen, welche vom Netzteil der Inneneinheit abgeleitet werden, zur Außeneinheit.

Beispielsweise sind in der Außeneinheit insgesamt vier verschiedene rauscharme Frequenzumsetzer vorhanden. Mittels des ersten werden vertikal polarisierte SHF-Signale im Frequenzbereich zwischen 10,95 und 11,7 GHz verarbeitet, mittels des zweiten horizontal polarisierte SHF-Signale im Frequenzbereich zwischen 10,95 und 11,7 GHz, mittels des dritten vertikal polarisierte SHF-Signale im Frequenzbereich zwischen 12,50 und 12,75 GHz und mittels des vierten horizontal polarisierte SHF-Signale im Frequenzbereich zwischen 12,50 und 12,75 GHz.

Aus der US-A-5,027,430 ist ein in der Außeneinheit einer Satelliten-Empfangsanlage angeordneter rauscharmer Frequenzumsetzer bekannt, welchem über das zwischen der Außeneinheit und der Inneneinheit angeordnete Koaxialkabel eine Versorgungsspannung zugeführt wird, die einen ersten oder zweiten Gleichspannungswert aufweist. Aus dieser Versorgungsspannung werden in der Außeneinheit mittels eines Spannungsreglers die in der Außeneinheit benötigten Versorgungsgleichspannungen abgeleitet. Weiterhin wird in Abhängigkeit vom genannten Gleichspannungswert ein erstes oder zweites Frequenzband ausgewählt.

Aus der DE-A1-4124719 ist ein Satelliten-Empfangssystem bekannt, welches zwei Erreger- bzw. Speisesysteme aufweist. Bei diesem bekannten System erfolgt eine Umschaltung der Polarisationsrichtung in beiden Speisesystemen gleichzeitig und gemeinsam mittels einer Stromstärkenänderung und eine Umschaltung zwischen den beiden Speisesystemen durch Aktivierung bzw. Deaktivierung von deren Vorverstärkern in Abhängigkeit von der angelegten Steuergleichspannung, die 14 V oder 18 V betragen kann.

Die Aufgabe der Erfindung besteht darin, bei einem Satellitenempfänger einen neuen Weg für die Übertragung von Steuerspannungen von der Innen- zur Außeneinheit anzugeben.

Diese Aufgabe wird durch die im Anspruch 1 angegebenen Merkmale gelöst. Vorteilhafte Weiterbildungen ergeben sich aus den abhängigen Ansprüchen.

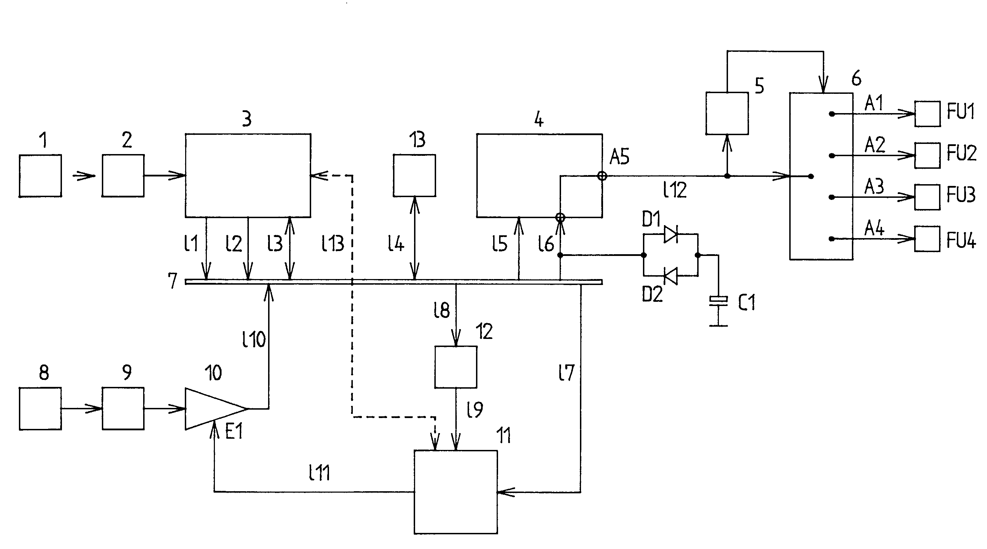

Die Vorteile der Erfindung ergeben sich aus der Erläuterung eines Ausführungsbeispiels anhand der Figur.

Diese zeigt die zum Verständnis der Erfindung nötigen Bauteile einer Satellitenempfangsanlage:
- einen Satellitenempfänger mit einem Fernbedienungsgeber 1, einem Fernbedienungsempfänger 2, einem Mikrocomputer 3, einem Satellitentuner 4, einem Leitungsbus 7, einem Netzteil 8, einem Gleichrichter 9, einem steuerbaren Spannungsregler 10, einer Überlagerungsschaltung 11, einem Frequenzgenerator 12, einem Satellitensenderspeicher 13, Signalleitungen l1-l11, einer Antiparallelschaltung zweier Dioden D1 und D2 und einem Elektrolytkondensator C1,
- ein Koaxialkabel l12 zwischen dem Satellitenempfänger und der Außeneinheit, und
- eine Außeneinheit mit einer Auswertungsschaltung 5, einem Mehrfachumschalter 6 und rauscharmen Frequenzumsetzern FU1 - FU4.

Die Ausgänge A1, A2, A3 und A4 des Mehrfachumschalters 6 sind mit den rauscharmen Frequenzumsetzern FU1, FU2, FU3 bzw. FU4 verbunden. Zur Umschaltung auf den Frequenzumsetzer FU1, der zum Empfang vertikal polarisierter Signale im Frequenzbereich zwischen 10,95 und 11,7 GHz vorgesehen ist, benötigt man eine Gleichspannung von 14 V ohne überlagerte Wechselspannung. Zur Umschaltung auf den Frequenzumsetzer FU2, der zum Empfang horizontal polarisierter Signale im Frequenzbereich zwischen 10,95 und 11,7 GHz vorgesehen ist, benötigt man eine Gleichspannung von 18 V ohne überlagerte Wechselspannung. Zur Umschaltung auf den Frequenzumsetzer FU3, der zum Empfang von vertikal polarisierten Signalen im Frequenzbereich zwischen 12,5 und 12,75 GHz vorgesehen ist, benötigt man eine Gleichspannung von 14 V mit einer überlagerten 22 kHz-Wechselspannung. Zur Umschaltung auf den Frequenzumsetzer FU4, der zum Empfang von horizontal polarisierten Signalen im Frequenzbereich zwischen 12,5 und 12,75 GHz vorgesehen ist, benötigt man eine Gleichspannung von 18 V mit einer überlagerten 22 kHz-Wechselspannung.

Im folgenden wird beschrieben, wie diese Gleichspannungen mit bzw. ohne überlagerter Wechselspannung im Satellitenempfänger erzeugt und von dort aus zur Außeneinheit übertragen werden.

Mittels der Programmwahltasten des Fernbedienungsgebers 1 wird ein gewünschter Programmplatz angewählt. Dieser Programmwahlbefehl wird vom Fernbedienungsempfänger 2 detektiert und an den Mikrocomputer 3 weitergegeben. Dieser adressiert in Ansprache auf den Programmwahlbefehl einen dem angewählten Programmplatz zugeordneten Speicherplatz des Satellitensenderspeichers 13. Dort sind Abstimmdaten für den Satellitentuner 4, ein erstes Kennbit für die dem angewählten Programmplatz zugehörige Gleichspannung (14 V oder 18 V) und ein zweites Kennbit für die Aktivierung bzw. Deaktivierung der Überlagerung der Gleichspannung mit Wechselspannung abgespeichert.

Die Abstimmdaten und die beiden Kennbits werden vom nichtflüchtigen Speicher 13 über die Signalleitung 14, den Leitungsbus 7 und die Signalleitung 13 dem Mikrocomputer 3 zugeführt. Vom Mikrocomputer 3 werden die Abstimmdaten über die Signalleitung 13, den Leitungsbus 7 und die Signalleitung 15 dem Satellitentuner 4 zugeführt. Weiterhin erzeugt der Mikrocomputer 3 aus den genannten Kennbits eine erste Schaltspannung für 14 V bzw. 18 V und eine zweite Schaltspannung für die Zu- oder Abschaltung eines 22 kHz-Wechselspannungssignals.

Die erste Schaltspannung wird vom Mikrocomputer 3 über die Signalleitung l1, den Leitungsbus 7 und die Signalleitung 17 der Überlagerungsschaltung 11 zugeführt.

Die zweite Schaltspannung wird vom Mikrocomputer 3 über die Signalleitung 12, den Leitungsbus 7 und die Signalleitung 18 dem Frequenzgenerator 12 zugeführt.

Ist dem angewählten Programmplatz der Frequenzumsetzer FU1 zugeordnet, dann bewirkt die zweite Schaltspannung eine Deaktivierung des Frequenzgenerators 12. Weiterhin durchläuft die erste Schaltspannung, die einen ersten Spannungspegel aufweist, die Überlagerungsschaltung 11 unverändert und wird über die Signalleitung l11 dem Steuereingang E1 des Spannungsreglers 10 zugeführt. Dem Signaleingang des Spannungsreglers 10 wird eine aus dem Netzteil 8 abgeleitete und am Ausgang des Gleichrichters 9 vorliegende Gleichspannung zugeführt, die beispielsweise 22 V beträgt. Aufgrund der am Steuereingang anliegenden Schaltspannung stellt der Spannungsregler 10 an seinem Ausgang eine Gleichspannung von 14 V zur Verfügung, die über die Signalleitung l10, den Leitungsbus 7 und die Signalleitung 16 zum Satellitentuner 4 geführt wird. Dieser stellt die Gleichspannung von 14 V unverändert an seinem Ausgang A5 zur Verfügung. Von dort aus wird die genannte Gleichspannung über das Koaxialkabel l12 zur Außeneinheit übertragen.

Ist dem angewählten Programmplatz hingegen der Frequenzumsetzer FU2 zugeordnet, dann bewirkt die zweite Schaltspannung eine Deaktivierung des Frequenzgenerators 12. Weiterhin durchläuft die erste Schaltspannung, die den zweiten Spannungspegel aufweist, die Überlagerungsschaltung 11 unverändert und wird über die Signalleitung l11 dem Steuereingang E1 des Spannungsreglers 10 zugeführt. Der Spannungsregler 10 stellt an seinem Ausgang eine Gleichspannung von 18 V zur Verfügung, die über die Signalleitung l10, den Leitungsbus 7 und die Signalleitung 16 zum Satellitentuner 4 geführt wird. Dieser stellt die Gleichspannung von 18 V unverändert an seinem Ausgang A5 zur Verfügung. Von dort aus wird die genannte Gleichspannung über das Koaxialkabel l12 zur Außeneinheit übertragen.

Ist dem angewählten Programmplatz der Frequenzumsetzer FU3 zugeordnet, dann bewirkt die zweite Schaltspannung eine Aktivierung des Frequenzgenerators 12, welcher an seinem Ausgang ein 22 kHz-Wechselspannungssignal zur Verfügung stellt. Dieses wird über die Signalleitung 19 der Überlagerungsschaltung 11 zugeführt. Weiterhin wird der Überlagerungsschaltung 11 über die Signalleitung 17 die erste Schaltspannung, die den ersten Spannungspegel aufweist, zugeführt. Am Ausgang der Überlagerungsschaltung 11 steht dann die erste Schaltspannung, die den ersten Spannungspegel aufweist, mit einem überlagerten 22 kHz-Wechselspannungssignal zur Verfügung. Das am Ausgang der Überlagerungsschaltung erhaltene Signal wird über die Signalleitung l11 dem Steuereingang E1 des Spannungsreglers 10 zugeführt. Dieser stellt an seinem Ausgang eine Gleichspannung von 14 V zur Verfügung, welcher ein 22 kHz-Wechselspannungssignal derart überlagert ist, daß der Spannungsbereich des Gesamtsignals im Intervall 14 V ± 0,3 V liegt. Vom Ausgang des Spannungsreglers 10 wird die Gleichspannung von 14 V mit dem überlagerten 22 kHz-Wechselspannungssignal über die Signalleitung l10, den Leitungsbus 7 und die Signalleitung 16 zum Satellitentuner 4 geführt. Dieser stellt die Gleichspannung von 14V mit dem überlagerten 22 kHz-Wechselspannungssignal unverändert an seinem Ausgang A5 zur Verfügung. Von dort aus erfolgt die Übertragung des genannten Signals über das Koaxialkabel l12 zur Außeneinheit.

Ist dem angewählten Programmplatz der Frequenzumsetzer FU4 zugeordnet, dann bewirkt die zweite Schaltspannung eine Aktivierung des Frequenzgenerators 12, welcher an seinem Ausgang ein 22 kHz-Wechselspannungssignal zur Verfügung stellt. Dieses wird über die Signalleitung 19 der Überlagerungsschaltung 11 zugeführt. Weiterhin wird der Überlagerungsschaltung 11 über die Signalleitung 17 die erste Schaltspannung, die den zweiten Spannungspegel aufweist, zugeführt. Am Ausgang der Überlagerungsschaltung 11 steht dann die erste Schaltspannung, die den zweiten Spannungspegel aufweist, mit einem überlagerten 22 kHz- Wechselspannungssignal zur Verfügung. Das am Ausgang der Überlagerungsschaltung 11 erhaltene Signal wird über die Signalleitung l11 dem Steuereingang E1 des Spannungsreglers 10 zugeführt. Dieser stellt an seinem Ausgang eine Gleichspannung von 18 V zur Verfügung, welcher ein 22 kHz-Wechselspannungssignal derart überlagert ist, daß der Spannungsbereich des Gesamtsignals im Intervall 18 V ± 0,3 V liegt. Vom Ausgang des Spannungsreglers 10 wird die Gleichspannung von 18 V mit dem überlagerten 22 kHz-Wechselspannungssignal über die Signalleitung l10, den Leitungsbus 7 und die Signalleitung 16 zum Satellitentuner 4 geführt. Dieser stellt die Gleichspannung von 18V mit dem überlagerten 22 kHz-Wechselspannungssignal unverändert an seinem Ausgang A5 zur Verfügung. Von dort aus erfolgt die Übertragung des genannten Signals über das Koaxialkabel l12 zur Außeneinheit.

In der Außeneinheit wird das über das Koaxialkabel l12 übertragene Signal einer Auswertungsschaltung 5 zugeführt, die erkennt, ob
a) eine 14 V-Gleichspannung ohne überlagerten 22 kHz-Anteil,
b) eine 18 V-Gleichspannung ohne überlagerten 22 kHz-Anteil,
c) eine 14 V-Gleichspannung mit überlagertem 22 kHz-Anteil oder
d) eine 18 V-Gleichspannung mit überlagertem 22 kHz-Anteil
vorliegt und in Abhängigkeit vom Ergebnis der Auswertung den Mehrfachschalter 6 derart umschaltet, daß der jeweils richtige Frequenzumsetzer mit der Signalleitung l12 verbunden ist.

Die zwischen der Signalleitung 16 und Masse angeordnete Reihenschaltung, welche aus der Antiparallelschaltung zweier Dioden D1 und D2 und dem in Reihe dazu geschalteten Elektrolytkondensator C1 besteht, hat zwei Aufgaben: Zum einen ist durch den Elektrolytkondensator C1 sichergestellt, daß die bei Programmumschaltvorgängen, die mit einer Änderung der Gleichspannung für die Außeneinheit verbunden sind, benötigte Energie nachgeliefert werden kann. Zum anderen wird durch die Antiparallelschaltung der Dioden D1 und D2 sichergestellt, daß bei Vorliegen einer Gleichspannung mit 22 kHz-Anteil der 22 kHz-Anteil nicht über den Elektrolytkondensator nach Masse abgeleitet wird.

Ein weiterer Vorteil des beschriebenen Satellitenempfängers besteht darin, daß die erzeugte Wechselspannung von 22 kHz am Ausgang des Spannungsreglers 10 niederohmig zur Verfügung steht. Dadurch kann das Signal auch über größere Leitungslängen ohne Probleme zur Außeneinheit übertragen werden. Es ist auch möglich, hohe Lasten an die Signalleitung l12 anzuschließen, ohne daß dies die Auswertungssicherheit in der Auswertungsschaltung 5 beeinträchtigt.

Beim oben beschriebenen Ausführungsbeispiel wurden 14 V und 18 V sowie eine Frequenz von 22 kHz als Umschaltkriterien verwendet. Es liegt im Belieben des Fachmannes, auch andere Zahlenwerte für die Gleichspannungen und die Frequenz des Wechselspannungssignals zu wählen.

Es ist auch möglich, die beschriebene Erfindung nicht nur zur Ansteuerung und ggfs. Versorgung von verschiedenen Frequenzumsetzern in der Außeneinheit, sondern auch zur Auswahl einer von mehreren Satellitenantennen zu verwenden.

Bei einer weiteren Ausführungsform der Erfindung ist der Frequenzgenerator 12 nicht als selbständiges Bauteil, sondern als Bestandteil des Mikrocomputers 3 realisiert. Bei dieser Ausführungsform wird das 22 kHz-Wechelspannungssignal bei Bedarf vom Mikrocomputer 3 über die gestrichelt gezeichnete Signalleitung l13 direkt der Überlagerungsschaltung 11 zugeführt.

Die Abspeicherung der Kennbits für die jedem Programmplatz zugeordnete Gleichspannung und die Aktivierung bzw. Deaktivierung des Frequenzgenerators 12 im nichtflüchtigen Satellitensenderspeicher 13 erfolgt bei der ersten Inbetriebnahme des Satellitenempfängers. Dazu werden vom Mikrocomputer 3 eine oder mehrere Menueseiten auf dem Bildschirm eines an den Satellitenempfänger angeschlossenen Fernsehempfängers dargestellt, in denen der Benutzer unter Verwendung des Fernbedienungsgebers 1 eine entsprechende Auswahl trifft.

Alternativ dazu kann die Abspeicherung der genannten Kennbits bereits bei der Fertigung des Satellitenempfängers im Werk erfolgen.

Werden die über die Signalleitung l12 übertragenen Steuersignale nicht nur zur Umschaltung zwischen verschiedenen Frequenzumsetzern, sondern auch zu deren Versorgung verwendet, dann ist die der Gleichspannung überlagerte Wechselspannung nicht störend, da in den Frequenzumsetzern üblicherweise Spannungsregler enthalten sind, die die Eingangsgleichspannung in eine niedrigere Gleichspannung herabregeln.

## Patentansprüche

1. Satellitenempfangsanlage mit einer Außeneinheit und einem Satellitenempfänger mit einer Spannungsversorgungsschaltung zur Erzeugung von Gleichspannungen für die Außeneinheit der Satellitenempfangsanlage, wobei die Spannungsversorgungsschaltung erste und zweite Gleichspannungen erzeugt,
**dadurch gekennzeichnet, dass**
die zweiten Gleichspannungen von einer Wechselspannung überlagert sind, wobei die Spannungsversorgungsschaltung einen steuerbaren Spannungsregler (10) mit einem Steuereingang (E1) aufweist und dem Steuereingang (E1) alternativ eine Steuergleichspannung oder eine Steuergleichspannung, die von einer Wechselspannung überlagert ist, zugeführt wird.

2. Satellitenempfangsanlage nach Anspruch 1,
**dadurch gekennzeichnet, dass**
die dem Steuereingang (E1) des steuerbaren Spannungsreglers (10) zugeführte Steuergleichspannung, die von einem Wechselspannungsignal überlagert ist, in einer Überlagerungsschaltung (11) erzeugt wird, deren ersten Eingang eine erste Schaltspannung mit einem vorbestimmten Spannungspegel und deren zweitem Eingang das Ausgangssignal eines Frequenzgenerators (12) zugeführt wird.

3. Satellitenempfangsanlage nach Anspruch 2,
**dadurch gekennzeichnet, dass**
der Frequenzgenerator (12) Bestandteil eines Mikrocomputers (3) ist.

4. Satellitenempfangsanlage nach einem der vorhergehenden Ansprüche,
**dadurch gekennzeichnet, dass**
die erste Schaltspannung vom Mikrocomputer (3) erzeugt wird.

5. Satellitenempfangsanlage nach einem der vorhergehenden Ansprüche,
**dadurch gekennzeichnet, dass**
das Ausgangssignal des steuerbaren Spannungsreglers (10) über eine Signalleitung (I10, 7, L6) am Ausgang des Satellitenempfängers zur Verfügung gestellt wird und zwischen der Signalleitung (l10, 7, L6) und Masse eine Reihenschaltung angeordnet ist, die aus der Antiparallelschaltung zweier Dioden (D1, D2) und einem in Reihe dazu geschalteten Kondensator (C1) besteht.

6. Satellitenempfangsanlage nach Anspruch 5,
**dadurch gekennzeichnet, dass**
der Kondensator (C1) ein Elektrolyt-Kondensator ist.

7. Außeneinheit einer Satellitenempfangsanlage, mit einem Satellitenempfänger gemäß Anspruch 1, mit einer Auswertungsschaltung (5),
**dadurch gekennzeichnet, dass**
der Auswertungsschaltung (5) alternativ eine in einem Satellitenempfänger erzeugte Gleichspannung oder eine im Satellitenempfänger erzeugte Gleichspannung, die von einer Wechselspannung überlagert ist, zugeführt wird, und die an ihrem Ausgang in Abhängigkeit vom Ergebnis der Auswertung ein Umschaltsignal für eine Umschalteinrichtung (6) zur Verfügung stellt.

8. Außeneinheit nach Anspruch 7,
**dadurch gekennzeichnet, dass**
die Umschalteinrichtung (6) ausgangsseitig mit mehreren Frequenzumsetzern (FU1, FU2, FU3, FU4) verbunden ist.

9. Außeneinheit nach Anspruch 7 oder 8,
**dadurch gekennzeichnet, dass**
die Umschalteinrichtung (6) ausgangsseitig mit mehreren Satellitenantennen verbunden ist.

## Claims

1. Satellite receiving system having an external unit and a satellite receiver comprising a voltage supply circuit for generating direct voltages for the external unit of the satellite receiving system, wherein the voltage supply circuit generates first and second direct voltages, **characterized in that** the second direct voltages are superimposed by an alternating voltage, wherein the voltage supply circuit has a controllable voltage regulator (10) having a control input (E1) and, alternatively, a control direct voltage or a control direct voltage that is superimposed by an alternating voltage is fed to the control input E1.

2. Satellite receiving system according to Claim 1, **characterized in that** the control direct voltage that is fed to the control input (E1) of the controllable voltage regulator (10) and that is superimposed by an alternating voltage signal is generated in a superimposing circuit (11) to whose first input a first switching voltage having a predetermined voltage level is fed and to whose second input the output signal of a frequency generator (12) is fed.

3. Satellite receiving system according to Claim 2, **characterized in that** the frequency generator (12) is a component of a microcomputer (3).

4. Satellite receiving system according to one of the preceding claims, **characterized in that** the first switching voltage is generated by the microcomputer (3).

5. Satellite receiving system according to one of the preceding claims, **characterized in that** the output signal of the controllable voltage regulator (10) is made available by a signal line (I10, 7, L6) at the output of the satellite receiver and there is disposed between the signal line (l10, 7, L6) and chassis a series circuit that comprises the antiparallel circuit of two diodes (D1, D2) and a capacitor (C1) connected in series thereto.

6. Satellite receiving system according to Claim 5, **characterized in that** the capacitor (C1) is an electrolytic capacitor.

7. External unit of a satellite receiving system having a satellite receiver in accordance with Claim 1, with an evaluation circuit (5), **characterized in that** there is fed to the evaluation circuit (5), alternatively, a direct voltage generated in a satellite receiver or a direct voltage generated in the satellite receiver that is superimposed by an alternating voltage and that makes available a switchover signal for a switchover device (6) at its output as a function of the result of the evaluation.

8. External unit according to Claim 7, **characterized in that** the output of the switchover device (6) is connected to a plurality of frequency converters (FU1, FU2, FU3, FU4).

9. External unit according to Claim 7 or 8, **characterized in that** the output of the switchover device (6) is connected to a plurality of satellite antennae.

## Revendications

1. Installation réceptrice par satellite avec une unité extérieure et un récepteur par satellite avec une commutation d'alimentation en courant pour générer des tensions continues pour l'unité extérieure de l'installation réceptrice par satellite, la commutation d'alimentation en courant générant des premières et deuxièmes tensions,
**se caractérisant par le fait que**
les deux tensions continues sont superposées par une tension alternative, la commutation d'alimentation en courant se composant d'un régulateur de tension pilotable (10) avec une entrée de commande (E1) et une tension continue de commande ou bien une tension continue de commande qui est superposée par une tension alternative, est menée à l'entrée de commande (E1).

2. Installation réceptrice par satellite selon la revendication 1,
**se caractérisant par le fait que**
la tension continue de commande qui est superposée par un signal de tension alternative et qui est amenée à l'entrée de commande (E1) du régulateur de tension pilotable (10), est générée dans une commutation de superposition (11) à la première entrée de laquelle une première tension d'enclenchement est amenée avec un niveau de tension déterminé à l'avance et à la deuxième entrée de laquelle le signal de sortie d'un générateur de fréquence (12) est amené.

3. Installation réceptrice par satellite selon la revendication 2,
**se caractérisant par le fait que**
le générateur de fréquence (12) est un élément d'un micro-ordinateur (3).

4. Installation réceptrice par satellite selon l'une des revendications précédentes,
**se caractérisant par le fait que**
la première tension d'enclenchement est générée par le micro-ordinateur (3).

5. Installation réceptrice par satellite selon la revendication 1,
**se caractérisant par le fait que**
le signal de sortie du régulateur de tension pilotable (10) est mis à disposition à la sortie du récepteur par satellite par l'intermédiaire d'un circuit d'acheminement de signaux (L10, 7, L6) et qu'un montage en série est placé entre le circuit d'acheminement des signaux (L10, 7, L6) et la masse, ce montage en série se composant du montage antiparallèle de deux diodes (D1, D2) et d'un condensateur monté en série (C1).

6. Installation réceptrice par satellite selon la revendication 5,
**se caractérisant par le fait que**
le condensateur (C1) est un condensateur électrolytique.

7. Unité extérieure d'une installation réceptrice par satellite avec un récepteur par satellite conformément à la revendication 1 avec une commutation d'évaluation (5),
**se caractérisant par le fait que**
soit une tension continue générée dans un récepteur par satellite ou une tension continue qui est superposée par une tension alternative, générée dans un récepteur par satellite est amenée à la commutation d'évaluation (5) et qui met à disposition à sa sortie en fonction du résultat de l'évaluation un signal de commutation pour un dispositif de commutation (6).

8. Unité extérieure selon la revendication 7,
**se caractérisant par le fait que**
le dispositif de commutation (6) est relié du côté sortie avec plusieurs convertisseurs de fréquence (FU1, FU2, FU3, FU4).

9. Unité extérieure selon la revendication 7 ou 8,
**se caractérisant par le fait que**
le dispositif de commutation (6) est relié du côté sortie avec plusieurs antennes par satellite.
